# EUROPÄISCHE PATENTSCHRIFT

(11) **EP 2 720 902 B1**
(45) Veröffentlichungstag und Bekanntmachung des Hinweises auf die Patenterteilung: **01.05.2019**
(21) Anmeldenummer: 12726451.3
(22) Anmeldetag: 11.06.2012
(51) Int. Cl.: B60L 11/18, B60W 50/14, G01C 21/34

(54) **VERFAHREN ZUR ANZEIGE DER REICHWEITE EINES FAHRZEUGS MIT ELEKTROANTRIEB UND ANZEIGEEINRICHTUNG**
METHOD FOR DISPLAYING THE OPERATING RANGE OF AN ELECTRIC DRIVE VEHICLE, AND DISPLAY
PROCÉDÉ D'AFFICHAGE DE L'AUTONOMIE D'UN VÉHICULE À ENTRAÎNEMENT ÉLECTRIQUE ET DISPOSITIF D'AFFICHAGE

(30) Priorität: 14.06.2011 DE 102011104153
(43) Veröffentlichungstag der Anmeldung: 23.04.2014
(73) Patentinhaber: Continental Automotive GmbH, 30165 Hannover (DE)
(72) Erfinder: KUHN, Thomas, 93128 Regenstauf (DE); MEIER, Herbert, 93055 Regensburg (DE); NGUYEN THIEN, Nhu, 93057 Regensburg (DE); STEGE, Alexander, 85296 Rohrbach (DE)
(86) Internationale Anmeldenummer: PCT/EP2012/060974
(87) Internationale Veröffentlichungsnummer: WO 2012/171865

(56) Entgegenhaltungen:
- EP-A2- 1 275 936
- WO-A1-2010/137307
- US-A1- 2010 094 496

## Beschreibung

Die Erfindung betrifft ein Verfahren zur Anzeige der Reichweite eines Fahrzeugs mit Elektroantrieb sowie eine entsprechende Anzeigeeinrichtung, die insbesondere mittels eines erfindungsgemäßen Computerprogrammprodukts zur Durchführung des vorgeschlagenen Verfahrens eingerichtet ist. Bei dem Verfahren ist vorgesehen, dass die aktuell zur Verfügung stehende Energie in der Batterie in einem Fahrzeug ermittelt und daraus eine maximale Reichweite des Fahrzeugs abgeleitet wird. Die Batterie ist typischer Weise in Form eines Akkumulators ausgebildet und liefert die elektrische Energie für den Elektroantrieb. Zur Ermittlung der maximalen Reichweite wird bei dem Verfahren als Zielpunkt mindestens eine Batterieservicestation ausgewählt, d. h. eine Station, an der ein Laden oder ein Austausch einer Batterie möglich ist, insbesondere eine Heimatposition im Sinne einer privaten Batterieservicestation (Zuhause, Arbeitsplatz oder dergleichen) oder eine Stromtankstelle im Sinne einer öffentlichen Batterieservicestation. Ausgehend von einem Startpunkt wird dann eine Erreichbarkeitsgrenze ermittelt, bei deren Überschreiten das Fahrzeug den Zielpunkt mit der aktuell zur Verfügung stehenden Energie in der Batterie nicht mehr erreichen kann und/oder nicht mehr zu dem Startpunkt (als Zielpunkt) zurückkehren kann. Diese Erreichbarkeitsgrenze wird auch als "Point of no Return" bezeichnet. Die Erreichbarkeitsgrenze wird als Reichweite in einer Kartendarstellung angezeigt, wobei die Kartendarstellung beispielsweise aus einer digitalen Karte, einer lediglich stilisierten Karte mit einigen ausgewählten Ortsangaben oder einer nur einen Maßstab enthaltenden Karte im einfachsten Fall bestehen kann.

Grundsätzlich ist es bei Fahrzeugen mit Elektroantrieben ein Problem, dass die gegenüber kraftstoffbetriebenen Fahrzeugen deutlich eingeschränkte Reichweite für den Fahrer deutliche Flexibilitätseinbußen bei seiner Routenplanung und dem Erreichen der gewünschten Ziele bedingt. Um die Akzeptanz von Elektrofahrzeugen zu erhöhen, ist es daher notwendig, den Fahrer zumindest gut über die von ihm noch erreichbaren Ziele zu informieren.

Hierzu sind grundsätzlich Anzeigen bekannt, bei denen ein Kreis in einer Kartendarstellung verwendet wird, dessen Radius ausgehend von dem Mittelpunkt des Kreises als aktuellem Standort die Grenzen des erreichbaren Bereichs bei direkter, d. h. radialer, Route angibt. Hierbei kann der Fahrer zwar erkennen, ob er sein Ziel auf direktem Weg noch erreichen kann. Wenn ein Zwischenziel nicht genau auf diesem radialen Weg liegt, weiß der Fahrer jedoch nicht genau, ob er auch ein solches Zwischenziel noch anfahren kann. Wenn man berücksichtigt, dass ein Fahrzeug an seinem Endziel auch eine Möglichkeit zum Aufladen oder Austauschen der Batterie in einer Batterieservicestation benötigt, wird das Endziel häufig nicht das eigentliche Nutzziel der Fahrt sein, weil an dem Nutzziel eine Möglichkeit zum Aufladen oder Austauschen der Batterie nicht immer gegeben ist. Dann stellen das Nutzziel eigentlich das Zwischenziel und die Batterieservicestation das eigentliche Endziel dar.

Aus der US 5,539,399 A ist eine Anzeige bekannt, bei der die Reichweite eines Fahrzeugs mit einem Elektroantrieb in Abhängigkeit von der aktuellen Batterieladung auf einer Straßenkarte angezeigt werden kann. Dies kann einfacher Weise durch einen Kreis um den aktuellen Standort erfolgen oder durch Markieren der erreichbaren Abschnitte aller von dem momentanen Standort aus befahrbaren Routen. Um die Genauigkeit zu erhöhen, werden topografische Daten der einzelnen Straßen oder Gebiete bei der Berechnung der maximalen Reichweite berücksichtigt, die in einer digitalen Straßenkarte mit gespeichert sind. Das geschilderte Problem von Zwischenzielen wird dabei nicht berücksichtigt, so dass es dem Fahrer überlassen bleibt, zu bewerten, ob er nach einem Zwischenziel auch das Endziel noch erreicht, an dem die Batterie des Fahrzeugs getauscht oder aufgeladen werden kann.

Die US 2010/0094496 A1 offenbart eine Anzeige der Grenze der maximalen Reichweite und einer "Point of no return"-Grenze, bei deren Überschreiten eine Rückkehr zu einem Referenzpunkt mit dem aktuellen Energievorrat ohne Laden oder Tauschen der Batterie nicht mehr möglich ist. Der Referenzpunkt kann das Zuhause des PKW-Nutzers oder eine Ladestation sein. Bei der Erreichbarkeitsbestimmung eines Ziels wird zunächst bestimmt, ob ein Fahrzeug das Ziel mit der in der Batterie aktuell vorhandenen Ladungsmenge erreichen kann. Ist dies nicht möglich, wird überprüft, ob das Fahrzeug eine Batterieservicestation erreichen kann, die dann einem Energieplan hinzugefügt wird, wobei gegebenenfalls auch eine Ladezeit an dieser Station mit berücksichtigt werden kann. Die Anzeige erfolgt im Rahmen einer Routenführung, wobei eine Warnmeldung generiert wird, wenn der Fahrer eine "Point of no return"-Grenze überschreitet, d. h. mit der in der Batterie verbliebenen Energie keine Batterieservicestation mehr erreichen kann. Umständlich hierbei ist, dass die Routen aufwendig geplant und durch den Nutzer immer die nächsten Ziele eingegeben bzw. bestätigt werden müssen. Dies ist bei spontanen Routenänderungen aufwendig und kompliziert. Außerdem muss immer die Aktualisierung der Routenplanung abgewartet werden, bis der Fahrer entscheiden kann, ob er die geplante Route auch tatsächlich fahren kann.

Die EP 2 172 740 A1 offenbart ein Verfahren zur Darstellung der Reichweite eines Fahrzeugs mit einem Elektroantrieb in Abhängigkeit einer Ladezeit der Batterie und des Standorts, wobei ausgehend von dem aktuellen Ladezustand der Batterie die Reichweite in Abhängigkeit von verschiedenen Ladedauern dargestellt wird. Gleichzeitig können die Straßengeometrie, Steigungsinformationen, Verkehrsinformationen und/oder Informationen aus einem Lernsystem herangezogen werden. Dies erleichtert dem Benutzer vor Fahrtantritt zwar, die für die nächste Fahrt benötigte Energiemenge als für ihn relevante Ladezeit des Systems abzuschätzen. Allerdings muss der Benutzer auch bei diesem System dafür Sorge tragen, dass er nach dem Erreichen des von ihm gewünschten Ziels auch noch bis zu einer Lade- oder Austauschstation weiter fahren kann.

Aus der JP-A-2006-112932 ist ein ähnliches Verfahren bekannt, bei dem ein Navigationsgerät es dem Nutzer eines elektrobetriebenen Fahrzeugs erlaubt, ein gewünschtes Ziel einzugeben, um dann die Ankunftszeit zu bestimmen, wobei neben der Fahrzeit auch die benötigte Energiemenge und gegebenenfalls die für eine Ladung der Batterie benötigte Zeit berücksichtigt wird, wenn die in der Batterie vorhandene Energie zum Erreichen des Ziels nicht ausreicht.

Die JP-A-2003-294463 beschreibt eine Eingabe oder Anzeige und Auswahl von Ladestationen in der Nähe eines gewünschten Ziels zur Berechnung, ob nach Erreichen des Ziels bis zu einer Ladestation weiter gefahren werden kann. Allerdings ist es hierbei notwendig, immer eine Zieleingabe vorzunehmen, wodurch die Flexibilität bei der Nutzung eingeschränkt wird. Es muss immer eine systemgestützte Routenplanung erfolgen, die spontane Wegänderungen des Fahrers erschwert. Die EP1275936 A2 wird als nächstliegender Stand der Technik angesehen und offenbart die Präambel des unabhängigen Anspruchs 1.

Aufgabe der Erfindung ist es, ein Verfahren zur Anzeige der Reichweite eines Fahrzeugs mit Elektroantrieb vorzuschlagen, welches dem Fahrer ein interaktives System zur übersichtlichen und dynamischen Reichweitenplanung bietet.

Diese Aufgabe wird mit den Merkmalen des Anspruchs 1 gelöst. Bei dem vorgeschlagenen Verfahren ist insbesondere vorgesehen, dass bei der Ermittlung der Erreichbarkeitsgrenze jeweils der aktuelle Standort als Startpunkt und die aktuell zur Verfügung stehende Energie in der Batterie, d. h. die aktuell ermittelte Energie in der Batterie, des Fahrzeugs verwendet werden, welche während der Fahrt des Fahrzeugs in vorgebaren Abstände aktualisiert werden.

Im Gegensatz zu den aus dem Stand der Technik bekannten Verfahren muss der Benutzer für die Nutzung der Anzeige zur Reichweitenplanung kein festes Routenziel vorgeben, sondern erhält eine Anzeige der aktuellen Reichweite auf Grundlage seines aktuellen, während der Fahrt ermittelten Standorts und des aktuellen, während der Fahrt ermittelten Batterieladezustands, wobei als notwendiger Zielpunkt für die Ermittlung der möglichen Reichweite jeweils eine Batterieservicestation ausgewählt ist, ohne dass der Fahrer hierfür eine spezielle Eingabe machen müsste. Dies gilt insbesondere, wenn er sich in einem bekannten Umfeld bewegt und nach Abschluss seiner Fahrten wieder an die Ausgangsposition zurückkehrt. Insofern kann als Zielpunkt bspw. die Heimatposition vorgegeben sein. Ausgehend von dieser Position erhält der Fahrer eine dynamische Steuerung ohne die Notwendigkeit einer gesonderten Zieleinstellung oder eine geänderten Eingabe bei dem Wunsch, die geplante Fahrtroute zu ändern. Hierdurch ist die vorgeschlagene Anzeige besonders benutzerfreundlich und kann flexibel an den jeweiligen Standort des Fahrzeugs angepasst werden.

In einer einfachsten Ausführungsform kann der Fahrer beispielsweise einmal einen Zielpunkt eingeben, der dann bei der Durchführung des erfindungsgemäßen Verfahrens immer wieder verwendet wird, bis der Fahrer einen anderen Zielpunkt wählt. Für eine Vielzahl von Anwendungsbereichen, beispielsweise Fahrten zwischen dem Arbeitsplatz und dem Heimatort sowie Fahrten um den Heimatort herum sind für die Durchführung des Verfahrens und das Anzeigen der Reichweite des Fahrzeugs dann keine weiteren Eingaben notwendig.

Um die notwendigen Nutzereingaben weiter zu reduzieren, kann erfindungsgemäß vorgesehen sein, dass der Zielpunkt nach vorgegebenen Kriterien automatisch ausgewählt wird, wobei bei Vorliegen bestimmter Kriterien auch automatisch eine manuelle Auswahl und/oder eine Bestätigung des Zielpunktes durch den Fahrer aktivierbar ist, beispielsweise durch Vorgabe einer geeigneten Auswahlmaske in einer Menüstruktur zur Benutzerinteraktion. Bei der Menüstruktur können verschiedene Menüabläufe vorgesehen werden, um eine manuelle Auswahl vorzusehen oder ein automatisch ausgewähltes Ziel zu bestätigen. Diese Menüpunkte können als Menüzielpunktbestätigung und Menüzielpunkteingabe realisiert sein, wobei je nach Eingabe von der einen in die andere Menüstruktur gewechselt werden kann. Die Kriterien für die automatische Auswahl eines Zielpunktes können vielfältig sein. So kann beispielsweise vorgeschlagen sein, jeweils die letzte Batterieservice- bzw. -ladestation, den aktuellen Standpunkt (sofern an diesem eine Batterieladung stattgefunden hat und/oder häufiger stattfindet) oder eine von dem Nutzer vorgegebene Heimatposition sein, wobei die Heimatposition bevorzugt dann ausgewählt wird, wenn diese bezogen auf die mit der aktuellen Batterieladung möglichen Reichweite ausreichend nah an dem aktuellen Standort als Startpunkt liegt. Ausreichend nah kann dabei so definiert sein, dass die Heimatstation noch erreichbar ist oder dass sie mit einem bestimmten Anteil der insgesamt zur Verfügung stehenden Energie, beispielsweise 25%, 50% oder 75 %, noch erreichbar ist, um auch Umwege und Zwischenziele noch zu ermöglichen.

Allgemein kann erfindungsgemäß vorgeschlagen werden, die Auswahl des Zielpunktes abhängig von der Entfernung - ausgehend von dem aktuellen Standort zu möglichen vorgegeben Zielpunkten - zu machen, wobei gegebenenfalls ein bestimmtes Ranking von Zielpunkten berücksichtigt wird. Ferner kann im Rahmen der Auswahl des Zielpunktes konfigurierbar sein, welche Zielpunkte automatisch und welche Zielpunkte nur nach Bestätigung als neue Zielpunkte auswählbar sind.

Eine besonders vorteilhafte und flexible Variante des erfindungsgemäß vorgeschlagenen Verfahrens sieht vor, dass der Zielpunkt auch während der Durchführung des Verfahrens, d. h. auch bei einer Bewegung des Fahrzeugs während der Fahrt, aktualisiert wird. Die Aktualisierung kann immer dann erfolgen, wenn das Fahrzeug bezogen auf den derzeit gewählten Zielpunkt die Erreichbarkeitsgrenze erreicht, wobei dies abgestuft mit vorheriger Warnmeldung erfolgen kann, wenn sich das Fahrzeug bis beispielsweise auf einen bestimmten Prozentwert der Erreichbarkeitsgrenze nähert.

Um dem Fahrer in der Anzeige bereits deutlich zu machen, welche Reichweite er bei einem Wechsel des Zielpunkts hätte, kann erfindungsgemäß vorgeschlagen werden, dass mehrere verschiedene Zielpunkte bei der Durchführung des Verfahrens ausgewählt und die Reichweite als zusammengefasste Reichweite dargestellt wird, gegebenenfalls in einer unterschiedlichen Darstellung für den bevorzugten und/oder derzeit ausgewählten Zielpunkt, beispielsweise die Heimatposition, die am häufigsten verwendete Ladestation, eine je nach Tageszeit übliche Batterieservicestation, wie beispielsweise die Heimatposition an Werktagen abends und nachts und die Arbeitsposition tagsüber, für aufgrund eines typischen Fahrverhaltens übliche Zielpunkte, d. h. insbesondere bei diesem Fahrverhalten üblicherweise aufgesuchte Batterieservicestationen, und für lediglich mögliche Batterieservicestationen, ohne dass hierfür eine bestimmte Präferenz besteht. Die möglichen Batterieservicestationen können beispielsweise öffentliche Stromtankstellen sein. Die unterschiedlich bevorzugten Zielpunkte können beispielsweise durch verschiedene Farbbereiche oder eine sonstige Darstellung unterschiedlich gekennzeichnet werden.

Vorzugsweise erfolgt bei dem vorliegenden Verfahren die Anzeige der Reichweite in einer mehr oder weniger detaillierten oder abstrakten Kartendarstellung durch Darstellung des derzeit ausgewählten Zielpunktes bzw. des derzeit ausgewählten und weiteren möglichen Zielpunkten und des Startpunkts, d. h. des in vorgegebenen Abständen aktualisierten Standorts als aktuellem Startpunkt sowie eines diese umgebenden Bereichs, wobei die Grenze dieses Bereichs durch die Reichweite von dem Startpunkt zu dem Zielpunkt definiert ist. Die Grenze des Bereichs ist also dadurch definiert, dass von dem Startpunkt aus diese Grenze erreicht und von der Grenze in einer Weiterfahrt der Zielpunkt noch erreicht werden kann, ohne dass die Batterie des Fahrzeugs zuvor aufgeladen werden muss. Die Grenze dieses Bereichs gibt somit der Erreichbarkeitsgrenze an, bei deren Überschreiten eine Anfahrt des gewählten Zielpunkts von dem aktuellen Startpunkt bzw. Standort aus nicht mehr möglich ist. Jeder Punkt außerhalb der Erreichbarkeitsgrenze ist somit ein "Point of no Return".

Die Darstellung des Zielpunkts hat den Vorteil, dass der Fahrer auch bei einem automatisch ausgewählten Zielpunkt diesem Zielpunkt auf den ersten Blick in der Kartendarstellung erkennt und gegebenenfalls über eine Benutzerschnittstelle ändern kann.

Die Aktualisierung des Standorts kann vorzugsweise über ein bekanntes Ortungssystem, insbesondere ein Satellitenortungssystem wie GPS, Galileo oder dergleichen, erfolgen. Durch Berücksichtigung des aktuellen Energievorrats wird die Anzeige ständig und dynamisch aktualisiert, sodass der Fahrer beispielsweise. auch über eine Änderung seines Fahrverhaltens die Möglichkeit hat, die aktuelle Reichweite zu erhöhen und den Zielpunkt doch noch zu erreichen.

Bei der vorbeschriebenen Darstellung ergeben die Länge von dem Startpunkt zu einem Punkt der Erreichbarkeitsgrenze und die Länge von diesem Punkt auf der Erreichbarkeitsgrenze zu dem Zielpunkt in der Summe gerade die mit dem Energievorrat erreichbare maximale Reichweite. Sofern Start- und Zielpunkt zusammen fallen, beispielsweise bei Start einer Fahrt von der Heimatposition aus, wird die Erreichbarkeitsgrenze durch einen Kreis symbolisiert.

Vorzugsweise wird die Reichweite erfindungsgemäß allgemein jedoch durch eine Ellipse dargestellt, wobei der Zielpunkt und der Startpunkt als Brennpunkte der Ellipse dargestellt werden und der Rand der Ellipse durch die der aktuellen Reichweite entsprechende Gesamtlänge der Schar von Verbindungslinien von dem einen Brennpunkt zu einem Punkt auf dem Rand der Ellipse (Erreichbarkeitsgrenze) und von diesem Punkt auf dem Rand der Ellipse zu dem anderen Brennpunkt definiert wird. Auch wenn in der Praxis die tatsächliche Reichweite, welche auch von der Art der zur Verfügung stehenden Straßen, der Topologie usw. abhängt, nicht exakt durch eine Ellipsenform wiedergegeben wird, kann durch diese Ellipsendarstellung eine einfache und übersichtliche dynamische Kartendarstellung erreicht werden, wobei bei dem Ermitteln der Reichweitengrenze eine gewisse Sicherheitsreserve eingerechnet werden kann. Mit abnehmender Energiereserve wird die Ellipse schmaler, bis sie sich zu einer Linie verdichtet. In diesem Fall wäre von dem aktuellen Standort aus nur noch direkt der Zielpunkt erreichbar und kein - nicht auf dieser Linie liegendes - Zwischenziel.

Erfindungsgemäß können bei dem vorgeschlagenen Verfahren auch mehrere Zielpunkte berücksichtigt werden, wobei bei Berücksichtigung mehrerer Zielpunkte für jeden Zielpunkt unter Berücksichtigung des jeweils aktuellen Startpunks (aktueller Standort des Fahrzeugs) die jeweilige Erreichbarkeitsgrenze ermittelt und als für alle Zielpunkte zusammengefasste Erreichbarkeitsgrenze im Sinne einer alle Erreichbarkeitsgrenzen einhüllenden Gesamt-Erreichbarkeitsgrenze dargestellt wird. Innerhalb dieser Gesamt-Erreichbarkeitsgrenze müssen die Begrenzungslinien der einzelnen Erreichbarkeitsgrenzen nicht mehr dargestellt werden. Vorzugsweise sollte aber der Bereich herausgehoben dargestellt werden, der ohne einen Wechsel des Zielpunktes erreichbar ist. Dies kann durch eine unterschiedliche Farbgestaltung oder einfacherweise durch eine - in diesem Fall doch im Inneren der Gesamt-Erreichbarkeitsgrenze - durchgezogene Begrenzungslinie erfolgen. Gegebenenfalls können die Begrenzungslinien auch in einem an den Randbereich anschließenden Überlappungsbereich dargestellt werden, um die Zugehörigkeit bestimmter Erreichbarkeitsgrenzen zu den verschiedenen Zielpunkten zu verdeutlichen.

Zur weiteren Verbesserung des erfindungsgemäß vorgeschlagenen Verfahrens können bei der Ermittlung der maximalen Reichweite zusätzlich Angaben über die Fahrweise (beispielsweise als mittlerer Stromverbrauch über einen oder mehrere zurückliegende Zeiträume), das Fahrzeugstromverbrauchsmanagement insbesondere betreffend eingeschaltete Verbraucher und/oder Informationen über die Topologie in der Umgebung um das Fahrzeug bspw. aus Karteninformationen einer gespeicherten digitalen Karte berücksichtigt werden. Diese Informationen müssen nicht notwendigerweise straßenbezogen sein, sondern können auch durch eine Klassifizierung bestimmter Umgebungsbereiche in der Topologie und zu der Klassifizierung passende mittlere Stromverbräuche ermittelt werden. Im Gegensatz zu einer straßenbezogenen Auswertung hat dies den Vorteil, dass das erfindungsgemäße Verfahren die Genauigkeit auch ohne die Aktivierung einer genauen Zielführung verfügbar macht, die erfindungsgemäß gerade vermieden werden soll. Ergänzend kann im Rahmen des erfindungsgemäß vorgeschlagenen Verfahrens auch vorgesehen sein, dass ggf. selbstlernend für wiederholt gefahrene Strecken bestimmte typische Stromverbräuche ermittelt werden. Dies kann gegebenenfalls durch eine gleitende oder beispielsweise mit der Anzahl der Fahrten auf dieser Strecke gewichtete Mittelwertbildung erfolgen.

Zur weiteren Detaillierung der für die Reichweitenermittlung herangezogenen Informationen können bei der Ermittlung der maximalen Reichweite auch Fahrzeugsensoren mit verwendet werden, wobei bevorzugt insbesondere solche Sensoren Verwendung finden, die durch andere in dem Fahrzeug ohnehin vorhandene Systemkomponenten bereits verbaut sind. Derartige Sensoren können beispielsweise Winkelgeber, Radsensoren, Geschwindigkeitssensoren, Beschleunigungssensoren, Steigungssensoren, Höhensensoren oder dergleichen sein. Insbesondere sind für das vorliegende Verfahren solche Sensoren sinnvoll, die auch Verwendung im Rahmen einer Koppelnavigation finden, bei der aus Sensorinformationen auf die zurückgelegte Strecke und/oder das zurückgelegte Streckenprofil zurückgeschlossen werden kann. Damit ist es erfindungsgemäß möglich, den Energieverbauch zurückgelegter Strecken auch ohne Ortungs- oder Navigationssysteme zu ermitteln, gegebenenfalls sogar zusammen mit Topologie-Informationen und/oder einer zusätzlichen Klassifizierung dieser Topologie, die natürlich auch aus den in Ortungssystemen und digitalen Karten enthaltenen Informationen ableitbar ist. Hierdurch lässt sich die Energieverbrauchsvorhersage zum Zielpunkt unter der Annahme ähnlicher benachbarter Topologien im Vergleich zu der gerade durchfahrenen Topologie verbessern und eine gute Vorhersage bei Rückkehr zum Ausgangspunkt erreichen, weil dann der Startpunkt zu Beginn der Fahrt mit dem Zielpunkt zusammenhängt und in diesem Fall die Topologie bekannt ist. Hierbei kann erfindungsgemäß berücksichtigt werden, dass die Fahrtrichtung nun umgekehrt ist und beispielsweise eine Steigung zu einem Gefälle wird. Dies kann bei der Energieprognose entsprechend umgerechnet werden.

Ferner bezieht sich die vorliegende Erfindung auf eine Anzeigeeinrichtung mit einem Display zur Anzeige der Reichweite eines Fahrzeugs mit Elektroantrieb, einer Recheneinheit mit Datenspeicher, einer Benutzerschnittstelle und einer Sensoreinheit zur Ermittlung der Position des Fahrzeugs, wobei das Display, die Benutzerschnittstelle und die Sensoreinheit mit der Recheneinheit verbunden oder verbindbar sind, beispielsweise über einen Fahrzeugbus, über welchen verschiedene Module mit dem Display, der Benutzerschnittstelle, der Recheneinheit und der Sensoreinheit (EN) miteinander in einer Kommunikationsverbindung stehen. Erfindungsgemäß ist die der Anzeigeeinrichtung zugeordnete Recheneinheit zur Durchführung des vorbeschriebenen Verfahrens oder Teilen hiervon eingerichtet.

Vorzugsweise kann die Sensoreinheit der erfindungsgemäßen Anzeigeeinrichtung einen Winkelgeber, einen Radsensor, einen Geschwindigkeitssensor, einen Beschleunigungssensor, einen Steigungssensor, einen Höhensensor und/oder einen Ortungssensor aufweisen. Geeignete Sensoren können auch in einer so genannten IMU (Intertial Measurement Unit) zur Fahrzeugstabilisierung integriert sein.

Schließlich betrifft die vorliegende Erfindung ein Computerprogrammprodukt mit Programmcodemitteln zur Einrichtung einer Anzeigeeinrichtung, insbesondere der vorbeschriebene Anzeigeeinrichtung, für die Anzeige der Reichweite eines Fahrzeugs mit Elektroantrieb, wobei die Programmcodemittel dazu geeignet sind, bei einer Implementierung auf einer Recheneinheit die Recheneinheit zur Durchführung des vorbeschriebenen Verfahrens oder Teilen hiervon einzurichten.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder beliebiger Kombination den Gegenstand der vorliegenden Erfindung, auch unabhängig von ihrer Zusammenfassung in den Ansprüchen oder deren Rückbezügen.

Es zeigen:
- Fig. 1: schematischen den Ablauf einer Ausführungsform des erfindungsgemäßen Verfahrens anhand eines schematischen Flussdiagramms;
- Fig. 2: den Ablaufplan für die Auswahl von Zielpunkten gemäß Fig. 1 in einem schematischen Flussdiagramm;
- Fig. 3: eine mögliche Anzeige der Erreichbarkeit auf einem Display in einem ersten Zustand;
- Fig. 4: eine mögliche Anzeige der Erreichbarkeit auf einem Display in einem zweiten Zustand;
- Fig. 5: eine mögliche Anzeige der Erreichbarkeit auf einem Display in einem dritten Zustand;
- Fig. 6: eine möglich Anzeige der Erreichbarkeit auf einem Display bei Auswahl mehrere Zielpunkte und
- Fig. 7: eine Anzeigeeinrichtung gemäß einer erfindungsgemäßen Ausführungsform.

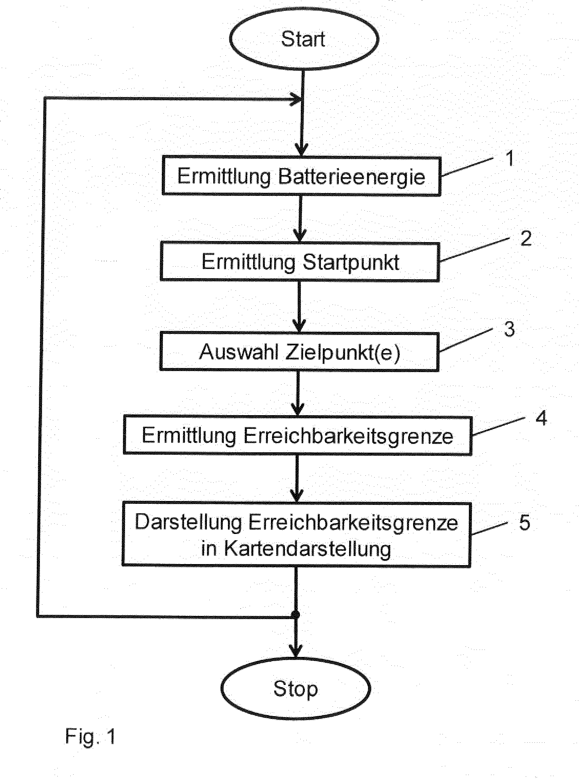

Nach dem Starten des Verfahrens findet bei dem in Fig. 1 dargestellten Verfahren in einem Verfahrensschritt 1 eine Ermittlung der aktuell zur Verfügung stehenden Energie in der Batterie statt. Dies kann durch Abfrage einer in dem Fahrzeug vorgesehenen Energiemanagementeinheit stattfinden, welche die Batterieladung ständig überwacht und beispielsweise in einer Anzeige im Cockpit des Fahrzeugs anzeigt. Diese Statusanzeige kann auch für die erfindungsgemäßen Zwecke verwendet werden.

In einem Verfahrensschritt 2 wird der Startpunkt ermittelt, von dem aus die Reichweite dargestellt werden soll. Dies ist erfindungsgemäß insbesondere der jeweils aktuelle Startpunkt des Fahrzeugs, der vorzugsweise durch ein entsprechendes Ortungssystem, beispielsweise mittels einer Satellitenortung, festgestellt werden kann. Hilfsweise kann der Startpunkt, von dem aus die Reichweite dargestellt werden soll, auch über eine Koppelnavigation und die entsprechenden Sensorinformationen ausgehend von einem bekannten Standort ermittelt werden.

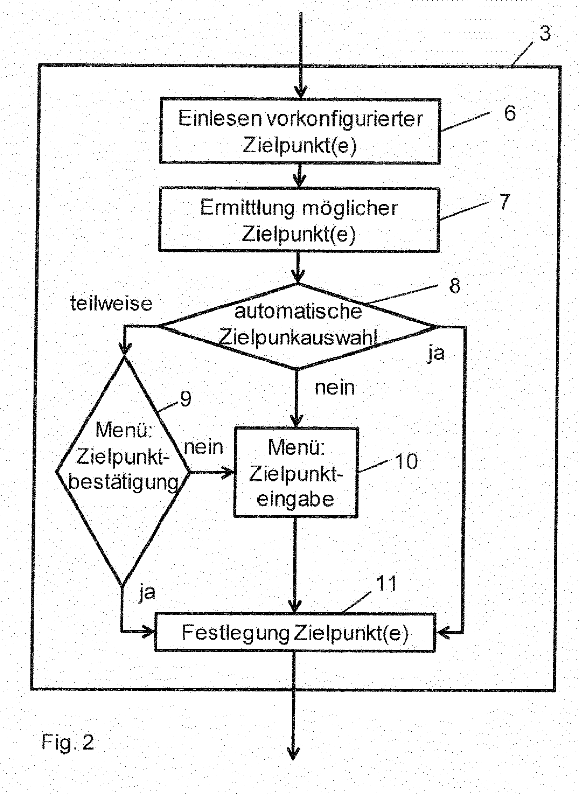

In einem Verfahrensschritt 3 findet die Auswahl eines Zielpunkts oder gegebenenfalls mehrerer Zielpunkte statt, wobei die (sämtliche) Zielpunkte erfindungsgemäß Batterieservicestationen sind, in welchen die Batterie des Fahrzeugs wiederaufgeladen oder getauscht werden kann. Als Zielpunkte kommen insbesondere also eine Heimatposition (Zuhause, Arbeit oder dergleichen) infrage, in welchen zumindest für den Fahrer privat die Möglichkeit besteht, die Batterie seines Fahrzeugs aufzuladen. Diese Zielpunkte muss der Fahrer bei der Konfiguration des erfindungsgemäßen Systems zur Durchführung des Verfahrens, d. h. in dem hierfür vorgesehenen Computerprogramm, eingeben. Alternativ oder zusätzlich kann bei der Durchführung des Verfahrens selbstlernend ermittelt werden, welche Positionen als Zielpunkte infrage kommen, indem das Verfahren die Positionen erlernt, an welchen eine Ladung oder ein Austausch der Batterie stattgefunden hat. Ferner können beispielsweise aus digitalen Karteninformationen öffentliche Batterieservicestationen ermittelt werden. Die Auswahl der Zielpunkte kann automatisch, durch Eingabe über eine Benutzerschnittstelle oder ein einem kombinierten Verfahren erfolgen, wie später noch unter Bezug auf Fig. 2 näher erläutert.

In dem Verfahrensschritt 4 wird auf Basis der zuvor ermittelten und ausgewählten Informationen die Erreichbarkeitsgrenze ermittelt, d. h. der Bereich, der ausgehend von dem Startpunkt erreicht werden kann, wobei von der Erreichbarkeitsgrenze jeweils noch eine Rückkehr des Fahrzeugs bis zu dem Zielpunkt möglich sein muss. Hierzu wird im Rahmen des Verfahrens eine erreichbare Entfernung auf Grundlage eines typischen mittleren Stromverbauchs pro Kilometer und der aktuell zur Verfügung stehenden Energie in der Batterie ermittelt bzw. abgeschätzt, wobei die Ermittlung durch die Verwendung von Detailinformationen präziser gefasst werden kann.

So kann der mittlere Stromverbrauch unmittelbar nach Auslieferung des Fahrzeugs oder nach einem Systemreset mangels empirisch erhobener Daten zunächst auf der Grundlage typischer mittlerer Verbrauchswerte des Herstellers erfolgen. Diese können nach einer gewissen Laufzeit des Fahrzeugs durch einen gemessenen und damit der typischen Nutzung des Fahrzeugs angepassten Langzeitmittelwert ergänzt oder ersetzt werden. Neben diesem Langzeitmittelwert ist es auch sinnvoll, einen Mittelwert über einen kürzeren Zeitraum, beispielsweise ab Antritt der Fahrt und/oder der letzten Fahrt, zu verwenden, da dieser automatisch die derzeit typische Umgebung (Stadt, Überland, Autobahn), die Geländetopologie (eben, hügelig, bergig) sowie äußere Einflüsse (Temperatur) mit berücksichtigt. Hierfür kann aus Geschwindigkeits- und Zeitsensoren die zurückgelegte Strecke berechnet und aus dem Batteriemanagement des Fahrzeugs der Batterieverbrauch aufsummiert werden. Aus diesen Angaben lässt sich für verschiedene Zeitintervalle der Durchschnittsverbauch errechnen und damit die mögliche Restreichweite. Sobald die Restreichweite kleiner wird als die zurückgelegte Strecke, abzüglich einer Toleranzgrenze, ist ein "Point of no Return" erreicht, bei dessen Überschreiten das Fahrzeug nicht mehr an den Ausgangspunkt zurückkehren kann. Je nach Fahrtrichtung und Lage des Zielpunktes relativ zu dem Startpunkt ergibt sich in einer Kartendarstellung ein Reichweitenbereich, welcher den Startpunkt und den Zielpunkt einschließt und dessen Grenze eine Linie markiert, deren Überschreiten eine Weiterfahrt des Fahrzeugs zu dem vorgegebenen bzw. derzeit Zielpunkt nicht mehr ermöglicht.

Die Erreichbarkeitsgrenze bzw. der Bereich der erreichbaren Reichweite wird anschließend in dem Verfahrensschritt 5 angezeigt. Solange sich das Fahrzeug bewegt, wird in vorgebbaren bzw. vorgegebenen Zeit- und/oder Entfernungsabstände das vorbeschriebene Verfahren wiederholt, sodass dynamisch bezogen auf den jeweils aktuellen Standort des Fahrzeugs die Reichweite und die Rückkehrmöglichkeit zu dem Zielpunkt für den Fahrer ersichtlich ist, ohne dass der Fahrer eine aufwendige Routenführung in einem Navigationsgerät durchführen muss.

Die Auswahl eines oder mehrerer Zielpunkte gemäß des erfindungsgemäßen Verfahrens stellt dabei keine Routenführung im eigentlichen Sinne dar, weil ein derartiger Zielpunkt häufig nicht für jede Fahrt ausgewählt werden muss, sondern beispielsweise bei ähnlichem Nutzungsverhalten des Fahrzeugs in einem begrenzten räumlichen Bereich Gültigkeit behält und/oder automatisch durch das vorgeschlagene Verfahren ausgewählt werden kann. Grund hierfür ist, dass der Zielpunkt nicht das eigentliche (subjektive) Nutzziel der Fahrt ist, sondern eine Batterieservicestation, an welcher das Aufladen der Fahrzeugbatterie erfolgen kann.

Ein besonders vorteilhaftes Verfahren zur Auswahl des Zielpunktes soll nachfolgend anhand von Fig. 2 näher erläutert werden, welche den Verfahrensschritt 3 zur Auswahl des Zielpunkts oder mehrerer Zielpunkte betrifft. Im Rahmen der Zielpunktauswahl findet zunächst ein Einlesen vorkonfigurierter Zielpunkte statt, bei denen es sich vorzugsweise um von dem Benutzer vorgegebene bevorzugte Zielpunkte handelt. Diese können insbesondere eine Heimatposition, wie das Zuhause oder der Arbeitsplatz, sein. Vorkonfigurierte Zielpunkte können aber auch durch das System selbstgelernte Zielpunkte sein, welche durch den Fahrer in der Vergangenheit häufig angefahren wurden, wobei bei diesen Zielpunkten regelmäßig, d. h. immer oder häufig, eine Aufladung oder ein Austausch der Batterie stattgefunden hat. An diesen Zielpunkten kann das Programm dann davon ausgehen, dass an diesen Positionen ein Batterieservice möglich ist, sodass auch diese Zielpunkte als Batterieservicestationen zur Verfügung stehen.

Gegebenenfalls kann der Fahrer eine Bewertung der verschiedenen vorhandenen Zielpunkte im Sinne eines Rankings vornehmen, sodass bei einer automatischen Auswahl von Zielpunkten das Verfahren dieses typische Ranking berücksichtigen kann. Dieses Ranking kann bspw. in wochentags- oder tageszeitabhängigen Profilen gespeichert sein. Dies geschieht bei dem Einlesen 6 vorkonfigurierter Zielpunkte.

Ergänzend wird durch das vorgeschlagene Verfahren in einer besonderen Ausführungsform auch eine Ermittlung 7 möglicher Zielpunkte durchgeführt, wobei zunächst beispielsweise aus einer digitalen Karte bekannte Batterieservicestationen als Zielpunkte in einem gewissen Umkreis um den aktuellen Standpunkt des Fahrzeugs ermittelt werden können. In einem weiteren Schritt wird bei der Ermittlung 7 möglicher Zielpunkte überprüft, welche der vorkonfigurierten Zielpunkte innerhalb eines vorgegebenen Reichweitenbereichs um das Fahrzeug liegen. Hieraus wird eine Liste aller möglichen Zielpunkte generiert, die dann an die automatische Zielpunktauswahl 8 weitergereicht wird. Sofern bei der Liste möglicher Zielpunkte der von dem Nutzer als bevorzugter Zielpunkt vorgegebene Zielpunkt enthalten ist, kann dieser ohne weitere Interaktion und Bestätigung durch den Fahrer ausgewählt und automatisch als Zielpunkt festgelegt werden.

Sofern dieser Zielpunkt in der Liste möglicher Zielpunkte nicht enthalten ist, jedoch eine Reihe von als bevorzugt gekennzeichneten Zielpunkten enthalten sind, kann die automatische Zielpunktauswahl 8 den in der Listung, d. h. dem Ranking am weitesten oben stehenden Zielpunkt aussuchen und dem Nutzer in einer Menüabfrage 9 zur Zielpunktbestätigung vorschlagen. Vorzugsweise wird in der Menüabfrage die Möglichkeit gegeben, andere bevorzugte Zielpunkte einfach auszuwählen. Nach einer Bestätigung oder Auswahl des Zielpunktes kann auch hier auch Festlegung des Zielpunkts erfolgen. In diesem Fall ist eine teilweise automatische Zielpunktauswahl möglich.

Sofern auch kein als bevorzugt gekennzeichneter Zielpunkt vorhanden ist, ist eine automatische Zielpunktauswahl nicht möglich. In dem Fall findet eine Menüabfrage 10 mit einer Zielpunkteingabe statt, wobei dem Benutzer in der Menüabfrage 10 gegebenenfalls sämtliche Zielpunkte vorgegeben werden können. Es ist auch möglich, dass der Benutzer einen völlig neuen Zielpunkt generiert.

Im Ergebnis folgt dann die Festlegung 11 des Zielpunkts bzw. sofern dies sinnvoll erscheint und/oder von dem Nutzer gewünscht wird, der mehreren Zielpunkte.

Diese Zielpunktauswahl kann in der gleichen Weise erfolgen, wenn das Fahrzeug die Erreichbarkeitsgrenze für einen Zielpunkt überschreitet und dann zwangsläufig ein neuer Zielpunkt ausgewählt werden muss. Hierfür werden alle Zielpunkte um den neuen Standort des Fahrzeugs festgestellt und die vorbeschriebene Festlegung des Zielpunkts erneut durchgeführt.

Es ist darauf hinzuweisen, dass die Auswahl von Zielpunkten automatisch oder teilautomatisch erfolgt, sodass der Benutzer im Gegensatz zu einer aufwendigen Eingabe bei einer Navigation hier lediglich aus einer Liste verschiedener Ziele auszuwählen hat, die bei typischen Nutzerverhalten auch geeignet vorkonfiguriert sind. Ein derartiges Verfahren ist wesentlich einfacher durchzuführen als die aus dem Stand der Technik jeweils bekannte aufwendige Routenplanung.

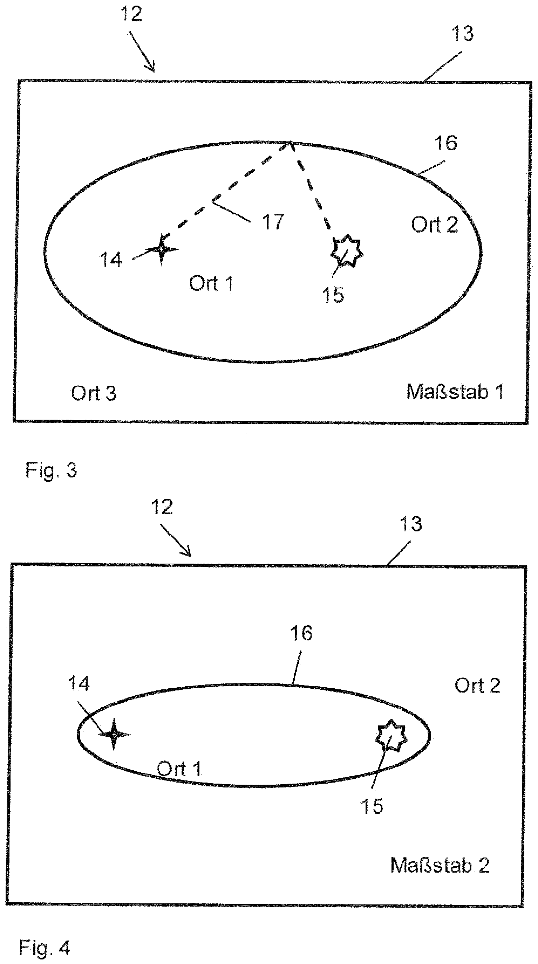

Fig. 3 zeigt eine erste Darstellung einer erfindungsgemäßen Anzeige 12 der Reichweite auf einem beispielsweise als Touch-Display ausgeführten Display 13, welches dann auch als Benutzerschnittstelle dienen kann. Bei der Anzeige 12 kann es sich um eine digitale Kartendarstellung oder eine kursorische, schematisierte Karte handeln, je nachdem welche Informationen für die Anzeige 12 zur Verfügung stehen.

In dem dargestellten Beispiel gemäß den Fig. 3, 4 und 5 ist die Kartendarstellung jeweils durch die Angaben "Maßstab 1, 2 bzw. 3" sowie die Orte "Ort 1", "Ort 2" und/oder "Ort 3" repräsentiert. In einer realen Darstellung ist es natürlich wünschenswert, möglichst viele Informationen einzublenden, insbesondere eine dem jeweiligen Maßstab angemessene Straßendarstellung, damit der Fahrer möglichst genaue Informationen zu der Reichweite erhält.

In der Karte sind der Startpunkt 14 entsprechend dem aktuellen Standort des Fahrzeugs durch einen vierzackigen Stern und der Zielpunkt 15 als die ausgewählte Batterieservicestation als siebenzackiger Stern wiedergegeben. Die wie vorbeschrieben ermittelte Reichweite wird durch die Ellipse 16 repräsentiert, innerhalb der der Startpunkt 14 und der Zielpunkt 15 liegen. Der Rand der Ellipse 16 stellt die Erreichbarkeitsgrenze dar, die ausgehend von dem Startpunkt 14 nicht überschritten werden kann, um den Zielpunkt noch zu erreichen. Eine beispielhafte Fahrtroute 17 ist als gestrichelte Linie eingezeichnet. Hierbei kann der Fahrer - ausgehend von dem Startpunkt 14 - bis zu dem Rand der Ellipse 16 auf der Erreichbarkeitsgrenze fahren und muss von dort weiter zu dem Zielpunkt 15 fahren, damit er den Zielpunkt 15 mit der aktuell noch vorhandenen Energie in der Batterie erreicht. Der Zielpunkt 15 stellt erfindungsgemäß eine Batterieservicestation dar, in welcher die Batterie geladen oder getauscht werden kann. Die Gesamtlänge der gestrichelten Linie (Fahrtroute 17) stellt somit die maximale Reichweite dar. Die Fahrtroute 17 ist in der Darstellung der Fig. 3 allerdings nur zur Erläuterung dargestellt und wird auf einer erfindungsgemäßen Anzeige 12 nicht oder zumindest nicht immer dargestellt.

Es wird darauf hingewiesen, dass die Fig. 3, 4, 5 und 6 lediglich eine schematische Darstellung des Funktionsprinzips bilden und keine geometrisch maßstabsgerechten Darstellungen sind.

Fig. 4 stellt einen späteren Zeitpunkt der gemäß Fig. 3 dargestellten Fahrtroute in einem größeren Maßstab 2 dar. Zu diesem Zeitpunkt ist bereits ein Teil der zu dem Zeitpunkt gemäß Fig. 3 noch vorhandenen Energie verbraucht, so dass die Ellipse 16 mit der Erreichbarkeitsgrenze nun schmaler ist. Dies bedeutet, dass der Fahrer auf einem direkteren Weg von dem aktuellen Standort als Startpunkt 14 zu dem Zielpunkt 15 fahren muss, um diesen Zielpunkt noch zu erreichen. Ort 2, der gemäß Fig. 3 noch innerhalb der Reichweite war, kann nun nicht mehr erreicht werden. Ort 3 ist in dieser Kartendarstellung mit dem "Maßstab 2" gar nicht mehr eingezeichnet, ebenso wenig, wie eine mögliche Fahrtroute 17, die in Fig. 3 zur Erläuterung der Bedeutung der Ellipse 16 als Erreichbarkeitsgrenze noch eingezeichnet war.

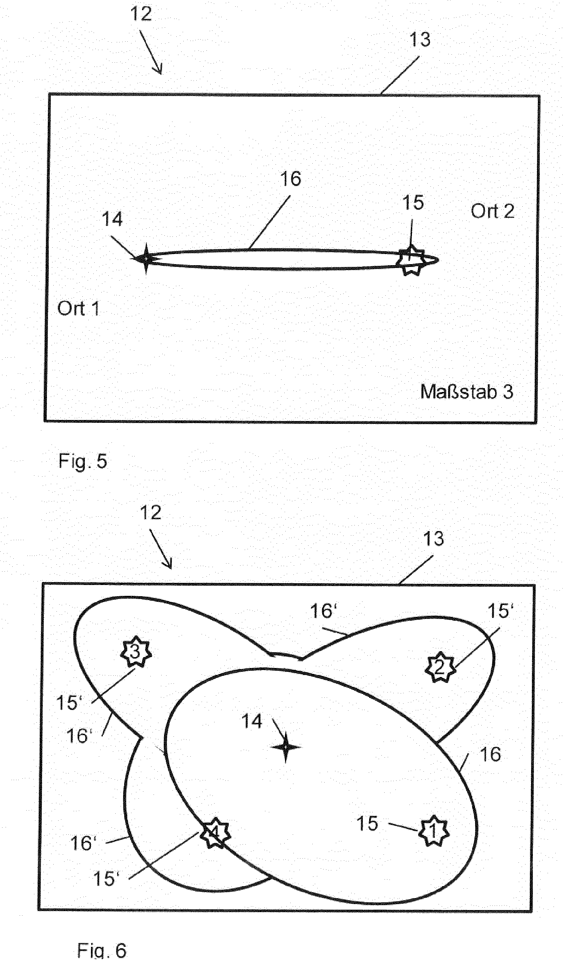

In der Darstellung gemäß Fig. 5 ist der Fahrer des Fahrzeugs noch weitergefahren und hat in der Zwischenzeit durch eine extensive Klimatisierung zusätzlich viel Strom verbraucht. Inzwischen ist die Ellipse 16 zwischen dem Startpunkt 14 und dem Zielpunkt 15 nahezu auf eine Gerade zusammengeschrumpft. Dies bedeutet, dass der Fahrer nun auf möglichst direktem Weg von dem aktuellen Standort (Startpunkt 14) zu dem angegebenen Zielpunkt 15 fahren muss, um dort die Batterie seines Kraftfahrzeugs zu laden oder auszutauschen. In dieser Darstellung ist der "Maßstab 3" gegenüber Fig. 4 noch weiter vergrößert.

Fig. 6 zeigt die Darstellung der Reichweite auf einem Display 13 der Anzeige 12, bei der mehrere Zielpunkte 15 ausgewählt sind, nämlich der als "1" bezeichnete bevorzugte Zielpunkt 15 und die als Zielpunkte "2", "3" und "4" bezeichneten Zielpunkte 15'. Zu jedem Zielpunkt 15 bzw. 15' wurde die Erreichbarkeitsgrenze als Ellipse 16 bzw. 16' bestimmt und in das Display 13 angezeichnet. Dabei ist die Ellipse 16 des bevorzugten Zielpunkts 15 vollständig dargestellt, um dem Fahrer anzuzeigen, dass er für seinen bevorzugten Zielpunkt 15 die dargestellte Reichweite hat. Für die übrigen Zielpunkte 15' wurde eine vergleichbare Reichweitenberechnung durchgeführt, wobei die sich ergebenen Ellipsen zu einer Gesamt-Ellipse 16' zusammengefasst wurden, welche die mögliche Gesamt-Reichweite bei Auswahl eines jeweiligen Zielpunktes 15' darstellt. Der Übersichtlichkeit halber wurden die Orte und der Maßstab der Kartendarstellung auf dem Display 13 in Fig. 6 nicht mit dargestellt.

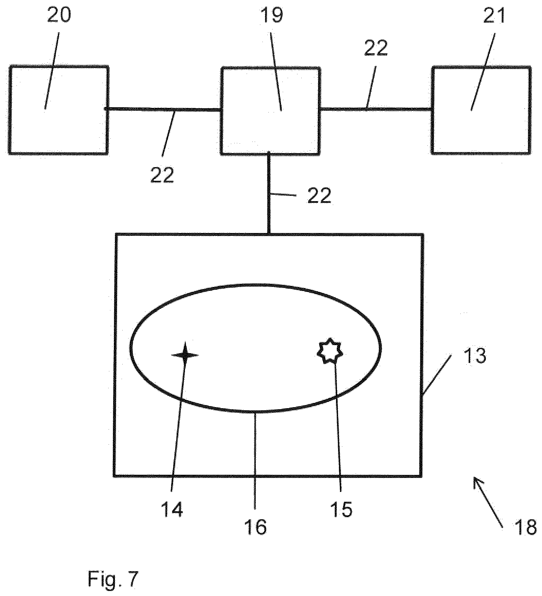

Fig. 7 zeigt schematisch die erfindungsgemäße Anzeigeeinrichtung 18 mit einem Display 13 zur Anzeige der Reichweite eines Fahrzeugs mit Elektroantrieb, wobei auf dem Display 13 schematisch der Startpunkt 14, der Zielpunkt 15 und die Ellipse 16 zu erkennen sind. Das Display 13 ist mit einer Recheneinheit 19 mit Datenspeicher sowie - über die Recheneinheit 19 - mit einer Benutzerschnittstelle 20 und einer Sensoreinheit 21 über einen Fahrzeugbus 22 verbunden. Erfindungsgemäß ist die Recheneinheit 19 zur Durchführung des vorbeschriebenen Verfahrens eingerichtet.

Damit stehen eine Anzeigeeinrichtung 18 und ein auf dieser ausgeführtes Verfahren zur Verfügung, bei dem die Reichweite eines Fahrzeugs mit einem Elektroantrieb ohne Zieleingabe dynamisch und in für den Fahrer übersichtlicher Weise dargestellt werden kann.

## Patentansprüche

1. Verfahren zur Anzeige (12) der Reichweite (16) eines Fahrzeugs mit Elektroantrieb, bei dem die aktuell zur Verfügung stehende Energie in der Batterie in einem Fahrzeug durch Abfrage einer im Fahrzeug vorgesehenen Energiemanagementeinheit ermittelt und daraus eine maximale Reichweite (16) des Fahrzeugs abgeleitet wird, wobei zur Ermittlung der maximalen Reichweite (16) des Fahrzeugs als Zielpunkt (15) mindestens eine Batterieservicestation ausgewählt wird, wobei ausgehend von einem Startpunkt (14) des Fahrzeugs eine Erreichbarkeitsgrenze (16) des Fahrzeugs ermittelt wird, bei deren Überschreiten das Fahrzeug den Zielpunkt (15) nicht mehr mit der aktuell zur Verfügung stehenden Energie in der Batterie erreichen kann, und wobei diese Erreichbarkeitsgrenze (16) als Reichweite (16) in einer Kartendarstellung angezeigt wird, wobei bei der Ermittlung der Erreichbarkeitsgrenze (16) jeweils der aktuelle, während einer Fahrt ermittelte Standort als Startpunkt (14) und der aktuelle, während einer Fahrt ermittelte Batterieladezustand des Fahrzeugs verwendet werden, welche während einer Fahrt des Fahrzeugs in vorgebbaren Abständen aktualisiert werden,
**dadurch gekennzeichnet, dass** der Zielpunkt (15) auch bei einer Bewegung des Fahrzeugs während der Fahrt aktualisiert wird und die Reichweite (16) des Fahrzeugs durch eine Ellipse (16) und der Zielpunkt (15) und der Startpunkt (14) als Brennpunkte der Ellipse (16) dargestellt werden und der Rand der Ellipse durch die der aktuellen Reichweite (16) entsprechende Gesamtlänge der Schar von Verbindungslinien von dem einem Brennpunkt (14) zu einem Punkt auf dem Rand der Ellipse (16) und von diesem Punkt auf dem Rand der Ellipse (16) zu dem anderen Brennpunkt (15) definiert wird.

2. Verfahren nach Anspruch 1, **dadurch gekennzeichnet, dass** der Zielpunkt (15) nach vorgegebenen Kriterien automatisch ausgewählt wird.

3. Verfahren nach Anspruch 1 oder 2, **dadurch gekennzeichnet, dass** der Zielpunkt (15) immer dann aktualisiert wird, wenn das Fahrzeug bezogen auf den derzeit gewählten Zeitpunkt die Erreichbarkeitsgrenze (16) erreicht.

4. Verfahren nach einem der vorhergehenden Ansprüche, **dadurch gekennzeichnet, dass** mehrere verschiedene Zielpunkte (15, 15') ausgewählt und die Reichweite (16) als zusammengefasste Reichweite (16, 16') dargestellt wird.

5. Verfahren nach einem der vorhergehenden Ansprüche, **dadurch gekennzeichnet, dass** die Anzeige der Reichweite (16) in einer Kartendarstellung durch Darstellung des Zielpunkts (15) und des Startpunkts (14) und eines diese umgebenden Bereichs erfolgt, wobei die Grenze dieses Bereichs durch die Reichweite (16) von dem Startpunkt (14) zu dem Zielpunkt (15) definiert ist.

6. Verfahren nach einem der vorhergehenden Ansprüche, **dadurch gekennzeichnet, dass** bei Berücksichtigung mehrerer Zielpunkte (15, 15') für jeden Zielpunkt (15, 15') unter Berücksichtigung des jeweils aktuellen Startpunkts (14) der die jeweilige Erreichbarkeitsgrenze (16, 16') ermittelt und als zusammengefasste Erreichbarkeitsgrenze (16, 16') dargestellt wird.

7. Verfahren nach einem der vorhergehenden Ansprüche, **dadurch gekennzeichnet, dass** bei der Ermittlung der maximalen Reichweite (16) zusätzlich Angaben über die Fahrweise, das Fahrzeugstromverbrauchsmangement und/oder Informationen über die Topologie in der Umgebung um das Fahrzeug berücksichtigt werden.

8. Verfahren nach einem der vorhergehenden Ansprüche, **dadurch gekennzeichnet, dass** bei der Ermittlung der maximalen Reichweite (16) Fahrzeugsensoren mitverwendet werden.

9. Anzeigeeinrichtung mit einem Display (13) zur Anzeige (12) der Reichweite (16, 16') eines Fahrzeugs mit Elektroantrieb, einer Recheneinheit (19) mit Datenspeicher, einer Benutzerschnittstelle (20) und einer Sensoreinheit (21) zur Ermittlung der Position des Fahrzeugs, **dadurch gekennzeichnet, dass** die Recheneinheit (19) zur Durchführung des Verfahrens nach einem der Ansprüche 1 bis 8 eingerichtet ist.

10. Anzeigeeinrichtung nach Anspruch 9, wobei die Sensoreinheit (21) einen Winkelgeber, Radsensor, Geschwindigkeitssensor, Beschleunigungssensor, Steigungssensor, Höhensensor und/oder Ortungssensor aufweist.

11. Computerprogrammprodukt mit Programmcodemitteln zur Einrichtung einer Anzeigeeinrichtung (18) für die Anzeige (19) der Reichweite (16; 16') eines Fahrzeugs mit Elektroantrieb, wobei die Programmcodemittel dazu geeignet sind, bei einer Implementierung auf einer Recheneinheit (19) die Recheneinheit (19) zur Durchführung des Verfahrens nach einem der Ansprüche 1 bis 8 einzurichten.

## Claims

1. Method for displaying (12) the operating range (16) of an electric drive vehicle, in which the currently available energy in the battery in a vehicle is determined by interrogating an energy management unit provided in the vehicle and from this a maximum operating range (16) of the vehicle is derived, at least one battery service station being selected as destination point (15) for determining the maximum operating range (16) of the vehicle, an accessibility threshold (16) of the vehicle being determined using a starting point (14) of the vehicle as a basis, in the case of the transgression of which the vehicle can no longer reach the destination point (15) with the currently available energy in the battery, and this accessibility threshold (16) being displayed as operating range (16) in a map illustration, wherein in the determination of the accessibility threshold (16), the current location, determined during travel, is in each case used as starting point (14), and the current battery state, determined during travel, of the vehicle is used, these being updated at predeterminable intervals while the vehicle is traveling, **characterized in that** the destination point (15) is also updated when the vehicle moves while travelling and the operating range (16) of the vehicle is shown through an ellipse (16), and the destination point (15) and the starting point (14) are shown as focal points of the ellipse (16) and the edge of the ellipse is defined by the total length of the group of connecting lines, corresponding to the current operating range (16), from one focal point (14) to a point on the edge of the ellipse (16) and from this point on the edge of the ellipse (16) to the other focal point (15).

2. Method according to Claim 1, **characterized in that** the destination point (15) is automatically selected in accordance with predetermined criteria.

3. Method according to Claim 1 or 2, **characterized in that** the destination point (15) is updated whenever the vehicle reaches the accessibility threshold (16) with reference to the currently selected destination point.

4. Method according to one of the preceding claims, **characterized in that** a number of different destination points (15, 15') is selected and the operating range (16) is displayed as combined operating range.

5. Method according to one of the preceding claims, **characterized in that** the display of the operating range (16) in a map illustration takes place by presentation of the destination point (15) and the starting point (14) and an area surrounding these, the boundary of this area being defined by the operating range (16) from the starting point (14) to the destination point (15).

6. Method according to one of the preceding claims, **characterized in that**, when considering a number of destination points (15, 15'), for each destination point (15, 15'), taking into consideration the respectively current starting point (14), the respective accessibility threshold (16, 16') is determined and shown as combined accessibility threshold (16, 16').

7. Method according to one of the preceding claims, **characterized in that** in the determination of the maximum operating range (16), additional information about the driving technique, the vehicle power consumption management and/or information about the topology in the environment around the vehicle is taken into consideration.

8. Method according to one of the preceding claims, **characterized in that** vehicle sensors are also used in the determination of the maximum operating range (16).

9. Display device comprising a display (13) for displaying (12) the operating range (16,16') of an electric drive vehicle, a computing unit (19) with data memory, a user interface (20) and a sensor unit (21) for determining the position of the vehicle, **characterized in that** the computing unit (19) is configured for performing the method according to one of Claims 1 to 8.

10. Display device according to Claim 9, wherein the sensor unit (21) has an angle transducer, wheel sensor, speed sensor, acceleration sensor, inclination sensor, height sensor and/or position finding sensor.

11. Computer program product comprising program code means for configuring a display device (18) for displaying (19) the operating range (16; 16') of an electric drive vehicle, wherein the program code means are suitable, in an implementation on a computing unit (19), for configuring the computing unit (19) for carrying out the method according to one of Claims 1 to 8.

## Revendications

1. Procédé pour afficher (12) le rayon d'action (16) d'un véhicule équipé d'un entraînement électrique, dans lequel
l'énergie disponible dans la batterie du véhicule à l'instant concerné est déterminée en interrogeant une unité de gestion de l'énergie prévue dans le véhicule et en en déduisant un rayon d'action (16) maximum du véhicule,
au moins une station-service de batterie étant sélectionnée comme point de destination (15) pour déterminer le rayon d'action (16) maximum du véhicule,
partant d'un point de départ (14) du véhicule, une limite (16) d'accessibilité par le véhicule, à laquelle le véhicule ne peut plus atteindre le point de destination (15) avec l'énergie disponible dans la batterie à l'instant concerné si elle est dépassée, est déterminée,
l'emplacement déterminé à l'instant concerné pendant un déplacement et l'état de charge de la batterie déterminé à l'instant concerné pendant un déplacement étant utilisés dans la détermination de la limite d'accessibilité (16) et étant actualisés à des intervalles prédéterminables pendant le déplacement du véhicule,
**caractérisé en ce que**
le point de destination (15) est également actualisé pendant le déplacement du véhicule, le rayon d'action (16) du véhicule étant représenté par une ellipse (16), le point de départ (14) et le point de destination (15) sous la forme des points focaux de l'ellipse (16) et
**en ce que** le bord de l'ellipse est défini par la longueur totale, qui correspond au rayon d'action (16) à l'instant concerné, du système de lignes reliant un point focal (14) à un point situé sur le bord de l'ellipse (16) et ce point du bord de l'ellipse (16) à l'autre point focal (15).

2. Procédé selon la revendication 1, **caractérisé en ce que** le point de destination (15) est sélectionné automatiquement selon des critères prédéterminés.

3. Procédé selon les revendications 1 ou 2, **caractérisé en ce que** le point de destination (15) est toujours actualisé lorsque le véhicule atteint la limite d'accessibilité (16) pour le point de destination sélectionné à cet instant.

4. Procédé selon l'une des revendications précédentes, **caractérisé en ce que** plusieurs points de destination (15, 15') différents sont sélectionnés et la limite d'accessibilité (16) est représentée comme limite d'accessibilité (16, 16') conjointe.

5. Procédé selon l'une des revendications précédentes, **caractérisé en ce que** l'affichage du rayon d'action (16) s'effectue sous la forme d'une carte par représentation du point de destination (15), du point de départ (14) et d'une zone qui les entoure, la limite de cette zone étant définie par le rayon d'action (16) entre le point de départ (14) et le point de destination (15).

6. Procédé selon l'une des revendications précédentes, **caractérisé en ce que** lorsque plusieurs points de destination (15, 15') sont pris en compte, pour chaque point visé (15, 15'), la limite d'accessibilité (16, 16') est déterminée en tenant compte du point de départ (14) à l'instant concerné et est représentée comme limite d'accessibilité (16, 16') conjointe.

7. Procédé selon l'une des revendications précédentes, **caractérisé en ce que** dans la détermination du rayon d'action (16) maximum, des données supplémentaires concernant le mode de conduite, la gestion de la consommation de courant par le véhicule et/ou des informations concernant la topologie de l'environnement du véhicule sont prises en compte.

8. Procédé selon l'une des revendications précédentes, **caractérisé en ce que** la détermination du rayon d'action (16) maximum fait intervenir des capteurs du véhicule.

9. Dispositif d'affichage doté d'un affichage (13) qui affiche (12) le rayon d'action (16, 16') d'un véhicule à entraînement électrique, le dispositif présentant une unité de calcul (19) équipée d'une mémoire de données, d'une interface d'utilisateur (20) et d'une unité de détection (21) qui détermine la position du véhicule,
**caractérisé en ce que**
l'unité de calcul (19) est conçue pour mettre en oeuvre un procédé selon l'une des revendications 1 à 8.

10. Dispositif d'affichage selon la revendication 9, dans lequel l'unité de détection (21) présente un capteur d'angle, un capteur de roue, un capteur de vitesse, un capteur d'accélération, un capteur de pente, un capteur d'altitude et/ou un capteur de localisation.

11. Produit de programme informatique doté de moyens de code de programme pour un dispositif d'affichage (18) permettant l'affichage (19) du rayon d'action (16, 16') d'un véhicule à entraînement électrique, les moyens de code de programme convenant, lorsqu'ils sont installés sur une unité de calcul (19), pour amener l'unité de calcul (19) à mettre en oeuvre un procédé selon l'une des revendications 1 à 8.
